# EUROPEAN PATENT APPLICATION

(11) **EP 4 685 026 A1**
(43) Date of publication of application: **28.01.2026**
(21) Application number: 25190167.4
(22) Date of filing: 17.07.2025
(51) Int. Cl.: B60W 40/08, B60K 28/06, B60W 30/18

(54) **DRIVER ASSISTANCE CONTROL DEVICE, DRIVER ASSISTANCE METHOD, AND COMPUTER PROGRAM**

(30) Priority: 24.07.2024 JP 2024118659
(71) Applicant: TOYOTA JIDOSHA KABUSHIKI KAISHA, Toyota-shi, Aichi-ken 471-8571 (JP)
(72) Inventor: MORIMOTO, Kazuhiro, TOYOTA-SHI, AICHI-KEN, 471-8571 (JP); TANAKA, Yusuke, TOYOTA-SHI, AICHI-KEN, 471-8571 (JP); FUKAYA, Motohiro, TOYOTA-SHI, AICHI-KEN, 471-8571 (JP); TOSHIMA, Kohei, TOYOTA-SHI, AICHI-KEN, 471-8571 (JP)
(74) Representative: Cabinet Beau de Loménie

(57) **Abstract**

A driver assistance control device (6) for a vehicle (100) is configured to perform driver assistance to make the vehicle (100) stop if it is judged that a driver of the vehicle (100) is in an abnormal state where continued driving of the vehicle (100) would be difficult and, at the time of the driver assistance, determine a stopping lane for making the vehicle (100) stop from among running lanes on the road based on recognition levels of the running lanes at the time of the driver assistance.

## Description

### FIELD

The present invention relates to a driver assistance control device, driver assistance method, and computer program.

### BACKGROUND

Japanese Unexamined Patent Publication No. 2021-109559 discloses a conventional running control device of a vehicle configured so that if it is judged that a driver is in an abnormal state losing his ability to operate the vehicle, when recognizing dividing lanes of a running lane in which a host vehicle is running (current running lane), it makes the host vehicle decelerate in the current running lane and holds the host vehicle in a stopping state as deceleration stop control.

### SUMMARY

However, even if recognizing dividing lines of a current running lane, sometimes the level of reliability of the result of recognition, that is, the recognition level of the current running lane, is low. In such a case, if ending up making a host vehicle decelerate and stop in the current running lane, the host vehicle is liable to end up being made to decelerate and stop based on mistakenly recognized dividing lines or on a mistakenly recognized running lane.

The present invention was made focusing on such a problem and has as its object to keep a host vehicle from ending up being made to decelerate and stop on a running lane with a low recognition level when judging that the driver has fallen in an abnormal state where continued driving would be difficult.

To solve this problem, a driver assistance control device for a vehicle, according to one aspect of the present invention, is configured to perform driver assistance to make the vehicle stop if it is judged that a driver of the vehicle is in an abnormal state where continued driving of the vehicle would be difficult and, at the time of the driver assistance, determine a stopping lane for making the vehicle stop from among running lanes on the road based on recognition levels of the running lanes at the time of the driver assistance.

Further, a driver assistance method for a vehicle performed by a control device, according to one aspect of the present invention, includes making the vehicle stop as driver assistance if it is judged that a driver of the vehicle is in an abnormal state where continued driving of the vehicle would be difficult; and, at the time of the driver assistance, determining a stopping lane for making the vehicle stop from among running lanes on the road based on recognition levels of the running lanes.

Further, a computer program, according to one aspect of the present invention, making a computer run processing making the vehicle stop as driver assistance if it is judged that a driver of the vehicle is in an abnormal state where continued driving of the vehicle would be difficult; and, at the time of the driver assistance, determining a stopping lane for making the vehicle stop from among running lanes on the road based on recognition levels of the running lanes.

According to these aspects of the present invention, the stopping lane where a vehicle is made to stop is determined from among the running lanes based on the recognition levels of the running lanes on the road, therefore it is possible to keep a host vehicle from ending up being made to decelerate and stop on a running lane with a low recognition level.

### BRIEF DESCRIPTION OF DRAWINGS

FIG. 1 is a schematic view of the configuration of a vehicle according to a first embodiment of the present invention.
FIG. 2 is a flow chart explaining deceleration stop control according to the first embodiment of the present invention.
FIG. 3 is a flow chart explaining deceleration stop control according to a second embodiment of the present invention.

### DESCRIPTION OF EMBODIMENTS

Below, referring to the drawings, embodiments of the present invention will be explained in detail. Note that, in the following explanation, similar component elements are assigned the same reference notations.

### (First Embodiment)

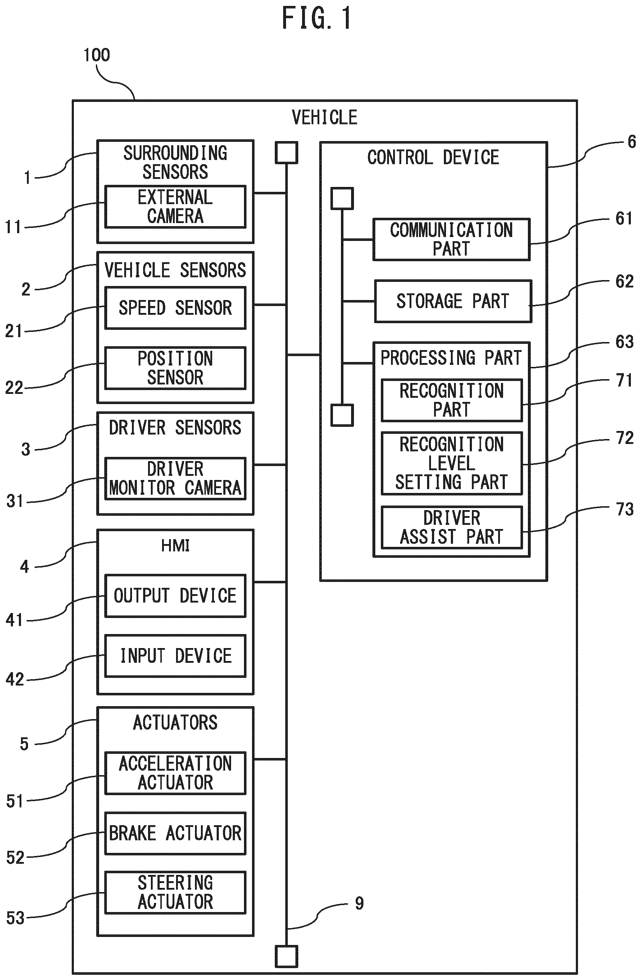

FIG. 1 is a schematic view of the configuration of a vehicle 100 according to a first embodiment of the present invention.

The vehicle 100 is provided with surrounding sensors 1, vehicle sensors 2, a driver sensor 3, an HMI (human machine interface) 4, actuators 5, and a control device 6. The surrounding sensors 1, vehicle sensors 2, driver sensor 3, HMI 4, actuators 5, and control device 6 are respectively connected to be able to communicate through an internal vehicle network 9 based on the Control Area Network standard.

The surrounding sensors 1 are sensors for generating surrounding data showing the state of the surroundings of the vehicle 100. As surrounding sensors 1, the vehicle 100 according to the present embodiment is provided with one or more external cameras 11 for capturing the surroundings of the vehicle 100. An external camera 11 captures the surroundings of the vehicle 100 by a predetermined frame rate (for example, 10 Hz to 40 Hz) and generates a surrounding image showing the surroundings of the vehicle 100. An external camera 11 sends a generated surrounding image as surrounding data to the control device 6 each time generating a surrounding image.

Note that, in addition to an external camera 11, a distance sensor measuring a distance to another vehicle or a motorcycle, pedestrian, or other object present in the surroundings of the vehicle 100 may be provided as a surrounding sensor 1. As an example of a distance sensor, for example, a lidar (light detection and ranging) device emitting a laser beam and measuring the distance based on the reflected light, a millimeter wave radar sensor emitting an electric wave and measuring distance based on the reflected wave, etc. may be mentioned.

A vehicle sensor 2 is a sensor for generating vehicle data showing the state of the vehicle 100. In the present embodiment, the vehicle 100 is provided with, as vehicle sensors 2, a speed sensor 21 generating speed data showing a running speed of the vehicle 100, a position sensor 22 generating latitude and longitude and current position data showing the current position of the vehicle 100, etc. However, the vehicle sensors 2 are not limited to these sensors. The data acquired by the sensors 21 and 22 are sent as vehicle data to the control device 6.

A driver sensor 3 is a sensor for generating driver data showing the state of a driver. The vehicle 100 according to the present embodiment is provided with a driver sensor 3 comprised of a driver monitor camera 31 for capturing the appearance of a driver including a face of the driver. The driver monitor camera 31 captures the appearance of the driver by a predetermined frame rate (for example, 10 Hz to 40 Hz) and generates an appearance image in which the appearance of the driver is shown. The driver monitor camera 31 sends a generated appearance image as driver data to the control device 6 each time generating an appearance image of the driver.

The HMI 4 is a user interface for transfer of information between the vehicle 100 and its occupants. The HMI 4 is provided with an output device 41 for notifying the vehicle occupants through the physical senses of the vehicle occupants (for example, sight, hearing, touch, etc.) and an input device 42 for vehicle occupants to perform entry operations and response operations. The output device 41 is, for example, a display (for example, meter display or center display, heads up display, etc.), a speaker, etc. The input device 42 is, for example, a touch panel, microphone, etc.

The HMI 4 notifies information according to the output signals received from the control device 6 through the output device 41 to the vehicle occupants and send data input through the input device 42 by the vehicle occupants to the control device 6.

The HMI 4 need not be installed in the vehicle 100 in advance and may be a smart phone or other terminal owned by a vehicle occupant. In the latter case, for example, information may be transferred by communication based on short distance wireless communication between the vehicle 100 and the terminal of the vehicle occupant, or information may be indirectly transferred through an outside sever (not shown) using communication between the terminal of the vehicle occupant and the outside server.

The actuators 5 are devices used for driving control of the vehicle 100. The vehicle 100 according to the present embodiment is provided with, as actuators 5, an acceleration actuator 51 for controlling acceleration of the vehicle 100 (for example, at least one of an engine and motor), a brake actuator 52 for controlling braking of the vehicle 100 (for example, a hydraulic actuator), and a steering actuator 53 for controlling steering of the vehicle 100 (for example, a steering motor).

The control device 6 is an ECU (electronic control unit) provided with a communication part 61, storage part 62, and processing part 63.

The communication part 61 has an interface circuit for connecting the control device 6 to the internal vehicle network 9. The communication part 61 supplies the various data received from the various sensors and HMI 4 etc. to the processing part 63. Further, the communication part 61 outputs the various signals output from the processing part 63 to the HMI 4, actuators 5, etc.

The storage part 62 has an HDD (hard disk drive) or SSD (solid state drive), semiconductor memory, or other storage medium and stores various computer programs and data etc. used for processing at the processing part 63.

The processing part 63 has one or more CPUs (central processing units) and their peripheral circuits and runs various computer programs stored in the storage part 62. The processing part 63, for example, is a processor. The processing part 63 may further have other processing circuits such as a logical operation unit, numeric operation unit, or graphic processing unit. The processing part 63 performs processing in accordance with the computer programs to thereby function as recognition part 71, recognition level setting part 72, and driver assistance part 73 and operates as modules for realizing predetermined functions. In the following explanation, when explaining processing having the modules 71 to 73 as the sentence subjects, this shows the processing part 63 running a program for realizing the modules 71 to 73.

Below, the contents of the specific processing performed at the control device 6 will be explained. That is, the contents of the modules 71 to 73 realized by the processing part 63 running processing according to computer programs will be explained.

The recognition part 71 recognizes the objects and features in the surroundings of the vehicle 100. The recognition part 71, for example, successively inputs surrounding images received from the external camera 11 into a classifier to thereby recognize another vehicle, motorcycle, pedestrian, or other object in the surrounding images and a curb or fence or other object similar to this or a road marking (for example, a dividing line defining a running lane etc.) and other features. The classifier, for example, can be made a convolutional neural network (CNN) having a plurality of convolutional layers connected in series from the input side toward the output side. Further, the recognition part 71, for example, uses standard sizes of objects and features stored in the storage part 62 for each type of the objects and features and sizes of objects and features recognized in the surrounding image to calculate the distances from the host vehicle to the objects and features and calculate the positions of the objects and features. Note that the method of recognizing objects and features is not limited to the above such method. Various known techniques may be used for recognition.

The recognition level setting part 72 sets the level of reliability of the results of recognition of the left and right dividing lines defining a running lane on the road (below, referred to as the "recognition level of the running lane"). The running lanes for which recognition levels are set by the recognition level setting part 72 include the running lane on which the vehicle 100 is running (below, referred to as the "current running lane") and running lanes with a direction of progression the same direction as the vehicle 100 (below, referred to as the "parallel running lanes"). The recognition levels of the running lanes are set to become higher the higher the precision of recognition of the left and right dividing lines defining the running lanes.

For example, in the present embodiment, the recognition level setting part 72 sets the recognition level of the current running lane to the lowest level of the level 0 if both the left and right dividing lines of the vehicle 100 ahead of the vehicle 100 have not been recognized, sets the recognition level of the current running lane to the level 1 if one of the left and right dividing lines of the vehicle 100 have been recognized, and sets the recognition level of the current running lane to the level 2 if both of the left and right dividing lines of the vehicle 100 have been recognized. Regarding the parallel running lanes as well, similarly, the recognition level setting part 72 sets the recognition level of each parallel running lane to the lowest level of the level 0 if both the left and right dividing lines ahead of the vehicle 100 have not been recognized (including also cases with no parallel running lanes), sets the recognition level of the parallel running lane to the level 1 if one of the left and right dividing lines of the parallel running lane has been recognized, and sets the recognition level of the parallel running lane to the level 2 if both of the left and right dividing lines of the parallel running lane have been recognized. As the cause why a dividing line cannot be recognized, for example, deterioration of a dividing line causing the dividing line to fade or be worn off, the effect of reflection of sunlight etc. from the road, etc. may be mentioned.

Note that, the method for setting the recognition level is not limited to such a method. It is also possible to set finer recognition levels.

For example, even if both the left and right dividing lines of the vehicle 100 can be recognized, when the difference between the distance in the vehicle width direction from the center of gravity of the vehicle 100 to the right side dividing line and the distance in the vehicle width direction from the center of gravity of the vehicle 100 to the left side dividing line is greater than or equal to a predetermined value, there is a possibility one of the dividing lines being mistakenly recognized. For this reason, at such a time, it is also possible to set the recognition level of the current running lane to, for example, in the above-mentioned example, 1.5 etc. to lower it. Further, even if one of the left and right dividing lines of the vehicle 100 can be recognized, if the distance in the vehicle width direction from the center of gravity of the vehicle 100 to the recognized dividing line is greater than or equal to a predetermined distance, there is a possibility the dividing line is being mistakenly recognized. For this reason, at such a time, it is also possible to set the recognition level of the current running lane to, for example, in the above-mentioned example, 0.5 etc. to lower it. Regarding a parallel running lane as well, in the same way as the current running lane, if recognizing another vehicle running in a parallel running lane and being able to calculate the distance in the vehicle width direction from that other vehicle to the dividing line, it is also possible to lower the recognition level of the parallel running lane in accordance with the distance in the vehicle width direction from that other vehicle to the dividing line.

The driver assistance part 73 controls the actuators 5 and performs driver assistance accompanied with driving control of the vehicle 100 based on the objects and features recognized by the recognition part 71. In the present embodiment, the driver assistance part 73 can perform driver assistance accompanied with driving control of the vehicle 100 by level 3 of a driving control level defined by the SAE (Society of Automotive Engineers), that is, a driving control level not requiring operations of the actuators 51 to 53 by the driver and monitoring of the surroundings. Further, the driver assistance part 73 can perform driver assistance accompanied with driving control of the vehicle 100 by a driving control level in which the driver is involved in driving the vehicle 100, for example, level 1 or level 2 of a driving control level defined by the SAE.

As one type of driver assistance accompanied with driving control of the vehicle 100, when, for example, due to a sudden change in physical condition etc., the driver has fallen in an abnormal state where continued driving of the vehicle 100 would be difficult, the driver assistance part 73 performs deceleration stop control making the vehicle 100 decelerate and holding the vehicle 100 in the stopped state.

Here, when performing deceleration stop control, to keep an accident due to performing deceleration stop control (for example, contact with a road user outside the vehicle etc.) from occurring, it is desirable to make the vehicle 100 decelerate and hold the vehicle 100 in a stopped state so as to prevent the vehicle 100 from departing from the roadway (part of road divided by curb or fence or other object similar to this or road marking for use for passage of the vehicle).

For this reason, in the past, if recognizing a current running lane, that is, if recognizing the left and right dividing lines of the host vehicle defining the current running lane, the practice had been to make the vehicle 100 decelerate in the current running lane and hold the vehicle 100 in the stopped state.

However, even if recognizing the left and right dividing lines of the vehicle 100 defining the current running lane, sometimes the level of reliability of the result of recognition, that is, the recognition level of the current running lane, is low. In such a case, if there are parallel running lanes with higher recognition levels than the current running lane present, it is possible to change lanes to a parallel running lane and make the vehicle 100 decelerate and stop on the parallel running lane to more reliably prevent departure of the vehicle 100 from the road.

Therefore, in the present embodiment, when performing deceleration stop control, the running level (stopping lane) for decelerating and stopping and holding the vehicle 100 is determined based on the recognition levels of the running lanes on the road. Due to this, it is possible to make the vehicle 100 decelerate and stop on a running lane relatively high in recognition level among the running lanes on the road.

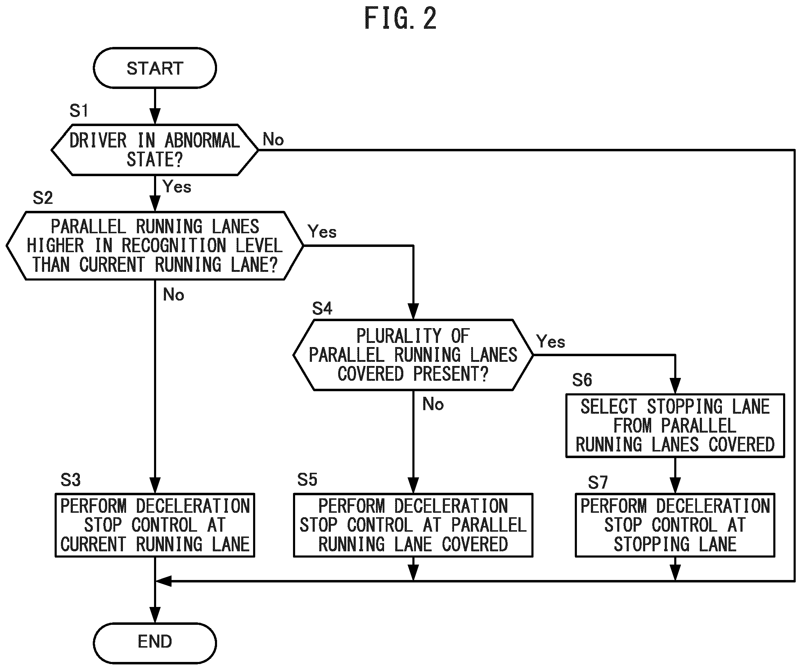

FIG. 2 is a flow chart explaining deceleration stop control according to this embodiment.

At step S1, the control device 6 judges whether the driver has fallen in an abnormal state where continued driving would be difficult (below, simply referred to as an "abnormal state"). In the present embodiment, the control device 6 judges that the driver has fallen in an abnormal state if a predetermined presumed abnormal state continues for a predetermined time T1. If the driver has fallen in an abnormal state, the control device 6 proceeds to the processing of step S2. On the other hand, if the driver has not fallen in an abnormal state, the control device 6 ends the current processing.

A presumed abnormal state is a state where it is deemed that a driver has fallen in an abnormal state. As a presumed abnormal state, for example, mention can be made of a state where driver assistance accompanied with driving control of the vehicle 100 by less than or equal to the level 2 of driving control level is being performed yet the driver is not performing an operation to steer the steering wheel. Whether the driver is performing an operation to steer the steering wheel can, for example, be judged based on the magnitude of the steering torque acting on the steering shaft rotating along with the steering wheel. Further, it is also possible to judge whether the driver is in a presumed abnormal state regardless of the driving control level based on, for example, the image of a driver monitor camera.

Note that, in the present embodiment, when a presumed abnormal state has continued for a predetermined time T0 (T0 being a shorter time than T1), a warning starts to be given to the driver through the HMI. Due to this, deceleration stop control can be performed only when a driver has fallen in an abnormal state where he cannot respond to a warning.

At step S2, the control device 6 judges if there are parallel running lanes higher in recognition level than the current running lane. If there are no parallel running lanes higher in recognition level than the current running lane, the control device 6 proceeds to the processing of step S3. On the other hand, if there are parallel running lanes higher in recognition level than the current running lane, the control device 6 proceeds to the processing of step S4.

At step S3, since there are no parallel running lanes higher in recognition level than the current running lane, the control device 6 makes the vehicle 100 decelerate in the current running lane and makes the vehicle 100 stop in the current running lane. That is, the control device 6 selects the current running lane as the running lane for decelerating and holding the stopped state of the vehicle 100 (below, referred to as the "stopping lane"). Note that, when at step S3, the recognition level of the current running lane is 0, that is, if neither the current running lane nor parallel running lanes are recognized, the control device 6, for example, can make the vehicle 100 simply proceed forward while making the vehicle 100 decelerate and making the vehicle 100 stop.

At step S4, the control device 6 judges if there are a plurality of parallel running lanes higher in recognition level than the current running lane, that is, parallel running lanes able to serve as a stopping lane. If there is only one parallel running lane higher in recognition level than the current running lane, the control device 6 proceeds to the processing of step S5. On the other hand, if there are a plurality of parallel running lanes higher in recognition level than the current running lane, the control device 6 proceeds to the processing of step S6.

At step S5, the control device 6 changes lanes to the only parallel running lane higher in recognition level than the current running lane, makes the vehicle 100 decelerate in that parallel running lane, and makes the vehicle 100 stop in that parallel running lane. That is, the control device 6 selects the only parallel running lane higher in recognition level than the current running lane as the stopping lane.

At step S6, the control device 6 selects the stopping lane from among the plurality of parallel running lanes higher in recognition level than the current running lane.

For example, the control device 6 can select the parallel running lane with the highest recognition level as the stopping lane. Further, the control device 6 can select the parallel running lane closest to the current running lane as the stopping lane considering the ease of lane change etc. among the plurality of parallel running lanes higher in recognition level than the current running lane. Further, the control device 6 can select the parallel running lane closest to the sidewalk side (in roads in Japan, the running lane positioned at the leftmost side) as the stopping lane considering the ease of assisting a driver after stopping among the plurality of parallel running lanes higher in recognition level than the current running lane. Further, to prevent unanticipated contact with road users on the sidewalk, motorcycles passing at the left side of the road and the like, etc., the control device 6 can select the parallel running lane away from the current running lane (in roads in Japan, the running lane positioned at the right side) as the stopping lane among the plurality of parallel running lanes higher in recognition level than the current running lane.

At step S7, the control device 6 changes lanes from the current running lane to the stopping lane (parallel running lane) selected at step S6, makes the vehicle 100 decelerate in the stopping lane, and makes the vehicle 100 stop in that stopping lane.

The control device 6 (driver assistance control device) of the vehicle 100 according to the present embodiment explained above is configured so that if it is judged that the driver of the vehicle 100 is in an abnormal state where continued driving of the vehicle 100 would be difficult, it performs driver assistance making the vehicle 100 stop and so that at the time of driver assistance, it determines the stopping lane making the vehicle stop from among the running lanes based on the recognition level of the running lanes on the road.

In this way, the stopping lane for making the vehicle stop is determined based on the recognition levels of the running lanes on the road, so it is possible to keep a host vehicle from ending up being made to decelerate and stop in a running lane with a low recognition level.

In particular, in the present embodiment, the control device 6 is configured so that if there is a running lane higher in recognition level than the current running lane on which the vehicle 100 is running among the running lanes on the road, it determines that running lane as the stopping lane.

Due to this, if the driver has fallen in an abnormal state, even if the current running lane is not recognized, it is possible to make the vehicle 100 stop at another running lane higher in recognition level than the current running lane. For this reason, if the driver has fallen in an abnormal state, even if the current running lane is not recognized, it is possible to make the vehicle 100 decelerate and stop if another running lane is recognized. Further, since it is possible to make the vehicle 100 decelerate and stop in a running lane higher in recognition level than the current running lane, so it is possible to more reliably prevent deviation of the vehicle 100 from the road.

Further, in the present embodiment, the control device 6 is configured so that if there are parallel running lanes higher in recognition level than the current running lane on which the vehicle 100 is running among the running lanes on the road, it determines the parallel running lane with the highest recognition level among the parallel running lanes as the stopping lane.

Due to this, it is possible to make the vehicle 100 decelerate and stop in the running lane with the highest recognition level, so it is possible to more reliably prevent departure of the vehicle 100 from the roadway.

Further, the control device 6 can be configured so that if there are parallel running lanes higher in recognition level than the current running lane on which the vehicle is running among the running lanes on the road, it determines the parallel running lane closest to the current running lane among the parallel running lanes as the stopping lane.

Due to this, it is possible to reduce the number of times of lane changes, so it is possible to keep accidents accompanying lane changes from occurring while making lane changes end fast, therefore it is possible to shorten the time up to making the vehicle 100 stop.

Further, the control device 6 can be configured so that if there are parallel running lanes higher in recognition level than the current running lane on which the vehicle 100 is running among the running lanes on the road, it decides on the parallel running lane closest to the sidewalk side among the parallel running lanes as the stopping lane.

Due to this, it is possible to assist a driver after making the vehicle 100 stop from the sidewalk side easily and safely.

Further, the control device 6 can be configured so that if there are parallel running lanes higher in recognition level than the current running lane on which the vehicle 100 is running among the running lanes on the road, it decides on the parallel running lane at the opposite side to the sidewalk among the parallel running lanes as the stopping lane.

Due to this, it is possible to prevent unanticipated contact with road users on the sidewalks, motorcycles passing at the left side of the road and the like, etc.

Further, in the present embodiment, the control device 6 is configured so that if the stopping lane differs from the current running lane on which the vehicle 100 is running, it changes lanes from the current running lane to the stopping lane and makes the vehicle 100 stop in the stopping lane. Further, in the present embodiment, the control device 6 is configured so as to recognize dividing lines on the road based on an image captured by the external camera 11 (imaging device) and set a recognition level of a running lane defined by dividing lines based on the results of recognition of the dividing lines.

### (Second Embodiment)

Next, a second embodiment of the present invention will be explained. The present embodiment differs from the first embodiment in the content of the processing after the driver falls in an abnormal state where continued driving would be difficult. Below, the points of difference will be focused on in the explanation.

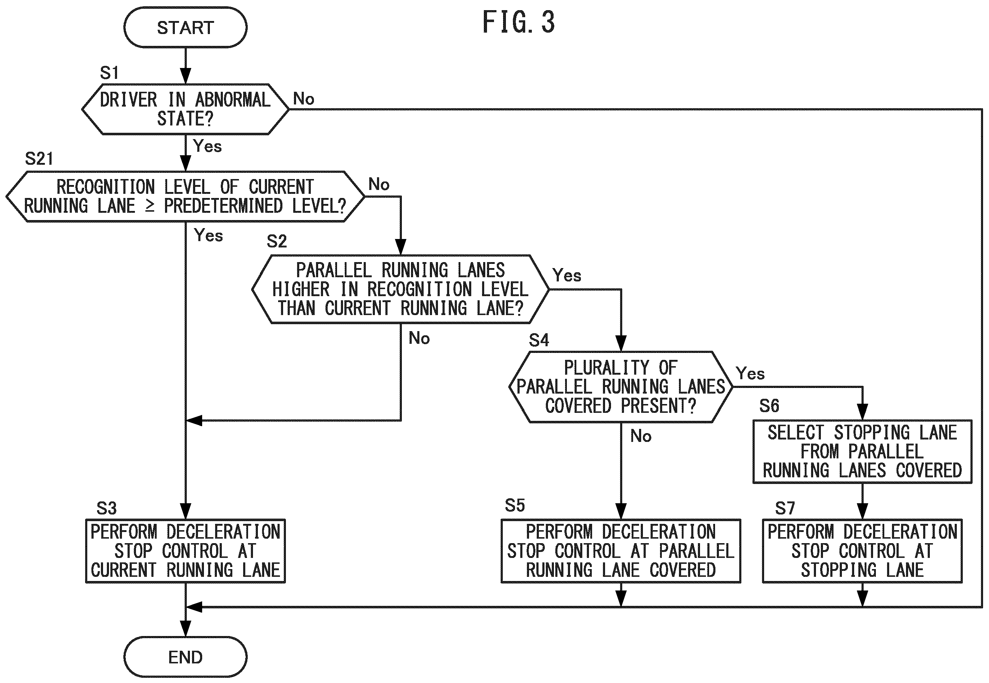

FIG. 3 is a flow chart explaining deceleration stop control according to this embodiment. FIG. 3 is similar to the first embodiment in the content of the processing from step S1 to step 7, so here the explanation will be omitted.

At step S21, the control device 6 judges if the recognition level of the current running lane is greater than or equal to a preset predetermined level (for example level 1). If the recognition level of the current running lane is greater than or equal to a predetermined level, the control device 6 proceeds to the processing of step S3. On the other hand, if the recognition level of the current running lane is less than a predetermined level, the control device 6 proceeds to the processing of step S2.

The control device 6 (driver assistance control device) of the vehicle 100 according to the present invention explained above is configured so that if the recognition level of the current running lane on which the vehicle 100 is running is greater than or equal to a preset predetermined level, it decides on the current running lane as the stopping lane and so that if the recognition level of the current running lane is less than the predetermined level, when there is a running lane with a higher recognition level than that current running lane, it decides on that running lane or the running lane with the highest recognition level among the lanes as the stopping lane.

Due to this, effects similar to the first embodiment explained above are obtained. In addition, if the recognition level of the current running lane is greater than or equal to a predetermined level, it is not necessary to confirm the recognition levels of the parallel running lanes, so the processing load of the control device 6 can be lightened.

Above, embodiments of the present invention were explained, but the above embodiments only show some of the examples of application of the present invention and are not intended to limit the technical scope of the invention to the specific constitutions of the embodiments.

For example, in the above embodiments, the computer program run in the control device 6 may also be provided in a form recorded in a computer readable portable recording medium such as a semiconductor memory, magnetic recording medium, or optical recording medium and may also be provided as a computer program product.

## Claims

1. A driver assistance control device (6) for a vehicle (100), wherein
the driver assistance control device (6) is configured to:
perform driver assistance to make the vehicle (100) stop if it is judged that a driver of the vehicle (100) is in an abnormal state where continued driving of the vehicle (100) would be difficult; and,
at the time of the driver assistance, determine a stopping lane for making the vehicle (100) stop from among running lanes on the road based on recognition levels of the running lanes.

2. The driver assistance control device (6) according to claim 1, configured so that if there is a running lane higher in recognition level than the current running lane on which the vehicle (100) is running among the running lanes on the road, it determines that running lane as the stopping lane.

3. The driver assistance control device (6) according to claim 1, configured so that if there are running lanes higher in recognition level than the current running lane on which the vehicle (100) is running among the running lanes on the road, it determines the running lane with the highest recognition level among the running lanes as the stopping lane.

4. The driver assistance control device (6) according to claim 1, configured so that if there are running lanes higher in recognition level than the current running lane on which the vehicle (100) is running among the running lanes on the road, it determines the running lane closest to the current running lane among the running lanes as the stopping lane.

5. The driver assistance control device (6) according to claim 1, configured so that if there are running lanes higher in recognition level than the current running lane on which the vehicle (100) is running among the running lanes on the road, it determines the running lane closest to a sidewalk side among the running lanes as the stopping lane.

6. The driver assistance control device (6) according to claim 1, configured so that if there are running lanes higher in recognition level than the current running lane on which the vehicle (100) is running among the running lanes on the road, it determines the running lane at the opposite side from a sidewalk among the running lanes as the stopping lane.

7. The driver assistance control device (6) according to claim 1, configured so that if the recognition level of the current running lane on which the vehicle (100) is running is greater than or equal to a preset predetermined level, it determines the current running lane as the stopping lane.

8. The driver assistance control device (6) according to claim 7, configured so that if the recognition level of the current running lane is less than the predetermined level, when there is a running lane higher in recognition level than the current running lane, it determines the running lane as the stopping lane.

9. The driver assistance control device (6) according to claim 7, configured so that if the recognition level of the current running lane is less than the predetermined level, when there are running lanes higher in recognition level than the current running lane, it determines the running lane with the highest recognition level among the running lanes as the stopping lane.

10. The driver assistance control device (6) according to any one of claim 1 to claim 9, configured so that if the stopping lane differs from the current running lane on which the vehicle (100) is running, it changes lanes from the current running lane to the stopping lane and makes the vehicle (100) stop in the stopping lane.

11. The driver assistance control device (6) according to any one of claim 1 to claim 8, configured so as to:
recognize dividing lines on a road based on an image captured by an imaging device (11); and
set a recognition level of a running lane defined by the dividing lines based on the results of recognition of the dividing lines.

12. A driver assistance method for a vehicle (100) performed by a control device (6),
the driver assistance method comprising:
making the vehicle (100) stop as driver assistance if it is judged that a driver of the vehicle (100) is in an abnormal state where continued driving of the vehicle (100) would be difficult; and,
at the time of the driver assistance, determining a stopping lane for making the vehicle (100) stop from among running lanes on the road based on recognition levels of the running lanes.

13. A computer program making a computer run processing:
making the vehicle (100) stop as driver assistance if it is judged that a driver of the vehicle (100) is in an abnormal state where continued driving of the vehicle (100) would be difficult; and,
at the time of the driver assistance, determining a stopping lane for making the vehicle (100) stop from among running lanes on the road based on recognition levels of the running lanes.
